# EUROPÄISCHE PATENTANMELDUNG

(11) **EP 3 366 536 A1**
(43) Veröffentlichungstag der Anmeldung: **29.08.2018**
(21) Anmeldenummer: 17158355.2
(22) Anmeldetag: 28.02.2017
(51) Int. Cl.: B60T 13/14, B60T 8/17, B60T 8/32

(54) **DRUCKMODULATOR MIT INTEGRIERTEM BREMSKRAFTVERSTÄRKER**

(71) Anmelder: Brake Force One GmbH, 72074 Tübingen (DE)
(72) Erfinder: Lauhoff, Jakob, 72070 Tübingen (DE)
(74) Vertreter: Kohler Schmid Möbus Patentanwälte

(57) **Zusammenfassung**

Ein Druckmodulator (100) für ein ABS-System, insbesondere eines Zweirads, mit einem Gehäuse (101), einem Hydraulikeingang (102) und einem damit über eine hydraulische Leitung (104) verbundenen Hydraulikausgang (103), sowie einer Druckmodulationsanordnung, mit der der Druck des Hydraulikmediums in der hydraulischen Leitung (104) bei aktivierter ABS-Funktion modulierbar ist, ist dadurch gekennzeichnet, dass der Druckmodulator (100) einen Bremskraftverstärker (50) aufweist.

## Beschreibung

Die Erfindung betrifft einen Druckmodulator für ein ABS-System, insbesondere eines Zweirads, mit einem Gehäuse, einem Hydraulikeingang und einem damit über eine hydraulische Leitung verbundenen Hydraulikausgang, sowie einer Druckmodulationsanordnung, mit der der Druck des Hydraulikmediums in den hydraulischen Leitungen bei aktivierter ABS-Funktion modulierbar ist.

Ein solcher Druckmodulator ist beispielsweise aus der DE 10 2014 007 717 B3 bekannt geworden.

Problematisch bei einem solchen Druckmodulator ist, dass der Druck am Hydraulikausgang häufig nicht ausreichend ist, um eine zuverlässige Zweiradbremsung zu bewirken. Aus diesem Grund weisen die Bremszangen, die mit einem solchen Druckmodulator zusammenarbeiten, einen Bremskraftverstärker auf, um einen ausreichenden Bremsdruck bereitzustellen, der dann beispielsweise auf eine Bremsscheibe wirkt.

Das Vorsehen eines Bremskraftverstärkers in einer Bremszange führt jedoch dazu, dass die Bremszange relativ groß bauend und teuer wird. Insbesondere bei einem Zweirad ist es jedoch wünschenswert, dass die Bremszange im Bereich eines Rads, insbesondere im Bereich eines Vorderrads, relativ klein bauend ist und eine geringe Masse aufweist. Der geringe verfügbare Platz führt insbesondere dazu, dass eine Limitierung hinsichtlich des Durchmessers des Bremskraftverstärkers besteht.

Aufgabe der vorliegenden Erfindung ist es daher, diesbezüglich Abhilfe zu schaffen.

Gelöst wird diese Aufgabe erfindungsgemäß durch einen Druckmodulator für ein ABS-System, insbesondere eines Zweirads, mit einem Gehäuse, einem Hydraulikeingang und einem damit über eine hydraulische Leitung verbundenen Hydraulikausgang, sowie einer Druckmodulationsanordnung, mit der der Druck des Hydraulikmediums in der hydraulischen Leitung bei aktivierter ABS-Funktion veränderbar ist, wobei der Druckmodulator einen Bremskraftverstärker aufweist. Erfindungsgemäß ist somit ein Druckmodulator mit integriertem Bremskraftverstärker vorgesehen. Der Druckmodulator kann an einer Stelle des Zweirads angeordnet werden, wo er nicht stört. Es ist daher kein Problem, wenn der Druckmodulator an dieser Stelle etwas größer baut, insbesondere mit einem größeren Durchmesser. Dies wiederum führt dazu, dass reibungsärmere Dichtungen verwendet werden können. Dank des Bremskraftverstärkers und dessen Druckübersetzung kann die Druckmodulationsanordnung, insbesondere ein darin enthaltener Linearantrieb, insbesondere ein Proportionalmagnet, schwächer, somit kompakter, leichter und günstiger ausgelegt werden.

Besonders vorteilhaft ist es, wenn ein Ventil vorgesehen ist, durch das die hydraulische Leitung im Bereich des Hydraulikeingangs bei aktivierter ABS-Funktion verschließbar ist. Somit kann ein Geberzylinder, der mit einer Betätigungsvorrichtung in Verbindung steht, bei aktivierter ABS-Funktion von der hydraulischen Leitung im Inneren des Druckmodulators abgekoppelt werden und kann der Druck des Hydraulikmediums durch die Druckmodulationsanordnung eingestellt werden.

Grundsätzlich ist es denkbar, dass der Druckmodulator und der Bremskraftverstärker ein gemeinsames, einstückiges Gehäuse aufweisen oder dass zumindest die Außenwand des Gehäuses einstückig ausgebildet ist. Aus Herstellungsgründen kann es jedoch vorteilhaft sein, wenn ein Bremskraftverstärkergehäuseteil mit einem Aktorgehäuseteil verbunden ist, wobei die Druckmodulationsanordnung im Aktorgehäuseteil angeordnet sein kann. Somit können der Teil des Druckmodulators, der die Druckmodulationsanordnung aufweist, und der Bremskraftverstärker zunächst getrennt hergestellt werden und anschließend miteinander verbunden werden. Dabei können das Bremskraftverstärkergehäuseteil und das Aktorgehäuseteil verclipst sein. Alternativ ist es denkbar, das Bremskraftverstärkergehäuseteil und das Aktorgehäuseteil miteinander zu verschrauben. Auch Bördeln oder Pressen sind zum Verbinden der Gehäuseteile denkbar.

Besondere Vorteile ergeben sich, wenn in dem Gehäuse ein Zylinderraum ausgebildet ist, in dem ein Stufenkolben mit zwei Abschnitten unterschiedlicher Querschnittsfläche angeordnet ist, wobei zwischen einer Gehäusewand und einem Stufenkolbenabschnitt größerer Querschnittfläche ein Füllvolumen und zwischen einer Gehäusewand und einem Stufenkolbenabschnitt kleinerer Querschnittsfläche ein Arbeitsvolumen ausgebildet ist. Durch den Stufenkolben wird der Bremskraftverstärker auf einfache Art und Weise, insbesondere platzsparende Art und Weise, realisiert. Insbesondere kann der Zylinderraum zumindest überwiegend im Bremskraftverstärkergehäuseteil angeordnet sein.

Der Stufenkolben kann gegen die Rückstellkraft eines Rückstellelements bewegbar sein. Beispielsweise kann der Stufenkolben dazu ferromagnetisch ausgebildet sein und durch einen Magneten als Rückstellelement bewegt werden. Alternativ ist es denkbar, ein Federelement als Rückstellelement vorzusehen.

Zwischen einem Gehäuseabschnitt und dem Stufenkolbenabschnitt größerer Querschnittsfläche kann ein Ringraum ausgebildet sein, in dem das Rückstellelement angeordnet ist. Grundsätzlich ist es denkbar, das Rückstellelement, welches als Federelement, insbesondere Schraubenfeder, ausgebildet sein kann, auch im Arbeitsraum vorzusehen. Dies hätte jedoch den Nachteil, dass das Rückstellelement mit einem geringeren Durchmesser ausgebildet werden müsste. Außerdem würde das Rückstellelement an dieser Position die Baugröße des Bremskraftverstärkers vergrößern. Der Ringraum ist für die Funktion des Bremskraftverstärkers ohnehin vorteilhaft. Er wird erfindungsgemäß auch für die Anordnung des Rückstellelements genutzt. Dadurch wird keine zusätzliche Baulänge verursacht. Die Anordnung des Rückstellelements im Ringraum bewirkt weiterhin, dass der vom Stufenkolben zurückgelegte Weg durch das Rückstellelement begrenzt wird. Außerdem kann an dieser Stelle eine relativ weiche Feder bei kleiner axialer Länge des Rückstellelements vorgesehen werden, die die gleiche Steifigkeit aufweist wie eine Feder, die im Arbeitsraum alternativ mit deutlich größeren Dimensionen angeordnet werden müsste.

Erfindungsgemäß kann weiterhin vorgesehen sein, dass der Ringraum ohne Atmosphärenanschluss ausgebildet ist. Wird eine Bremsung ausgeführt, wird demnach die Luft, die im Ringraum vorhanden ist, komprimiert. Dadurch kann die Bremskraft begrenzt werden. Außerdem kann das Rückstellelement im Ringraum dadurch schwächer dimensioniert werden. Wenn kein Atmosphärenanschluss vorhanden ist, kann auch sichergestellt werden, dass kein Schmutz in den Zylinderraum gelangt. Die komprimierte Luft kann auch weiterhin das Rückstellelement unterstützen, um den Stufenkolben in seine Ausgangsstellung zurückzugbewegen, wenn keine Bremsung benötigt wird. Auch die Ausfallsicherheit der Bremse wird durch den fehlenden Atmosphärenanschluss erhöht. Tritt eine Undichtigkeit am Stufenkolben auf, so gelangt die Hydraulikflüssigkeit lediglich in den Ringraum. Wäre ein Atmosphärenanschluss vorhanden, könnte Bremsflüssigkeit entweichen, mit der Folge, dass keine Bremsung mehr durchgeführt werden könnte.

Gemäß einer alternativen Ausführungsform kann der Ringraum mit einem Entlüftungskanal in Verbindung stehen. In den Ringraum gelangendes Hydraulikmedium kann dann über den Entlüftungskanal abgelassen werden.

Besondere Vorteile ergeben sich, wenn der Zylinderraum und ein Läuferraum koaxial angeordnet sind. Dies bedeutet, dass der Bremskraftverstärker und die Druckmodulationsanordnung in Strömungsrichtung des Hydraulikmediums vom Hydraulikeingang zum Hydraulikausgang gesehen hintereinander angeordnet sind. Durch diese Anordnung erhöht sich zwar die Länge des Druckmodulators etwas, dafür kann er relativ schlank gehalten werden.

Besondere Vorteile ergeben sich dadurch, dass im Stufenkolben ein Ventil angeordnet ist. Dadurch kann das Ventil selbst geöffnet sein. Wenn demnach bei einer Bremsbetätigung Hydraulikmedium gefördert wird, durchströmt das Hydraulikmedium zunächst das Arbeitsvolumen, das Ventil und das Füllvolumen und gelangt in den oder die Zylinderräume, in denen der oder die Bremskolben einer Bremszange angeordnet sind. Dies entspricht einer so genannten Füllphase. Wenn nun sämtliche Räume in der Bremszange mit Hydraulikflüssigkeit gefüllt sind und die Bremsbeläge, die durch die Bremskolben beaufschlagt sind, an der Bremsscheibe anliegen, steht an beiden Seiten des Stufenkolbens (im Füllvolumen und Arbeitsvolumen) der gleiche Druck an. Da die Stufenkolbenabschnitte jedoch unterschiedliche Querschnittsflächen aufweisen, bewirkt dies, dass der Stufenkolben im Zylinderraum verlagert wird. Bei der Verlagerung des Stufenkolbens wird das Ventil geschlossen, sodass bei einer weiteren Druckbeaufschlagung mittels der Betätigungsvorrichtung der Stufenkolben verlagert wird und die Hydraulikflüssigkeit im Arbeitsvolumen des Zylinderraums wirksam wird. Dies bedeutet, dass bei einer weiteren Betätigung der Betätigungsvorrichtung die Bremskolben die Bremsbeläge mit einer Normalkraft gegen die Bremsscheibe beaufschlagen und somit eine Bremsung erfolgt.

Besonders bevorzugt ist es, wenn sich das Ventil über ein Federelement am Stufenkolben abstützt. Dadurch ergibt sich eine kompakte Anordnung.

Besondere Vorteile ergeben sich, wenn ausgangsseitig des Stufenkolbens ein Filterelement vorgesehen ist. Dadurch kann verhindert werden, dass beim Zurückfließen von Hydraulikmedium Partikel in die hydraulische Leitung gelangen und dort für Verschleiß und Störungen sorgen.

Weitere Vorteile ergeben sich, wenn im Bereich des Hydraulikeingangs ein Filterelement vorgesehen ist. Durch diese Maßnahme wird verhindert, dass Partikel vom Eingang her in den Druckmodulator gelangen. Insbesondere ist das Vorsehen von zwei Filterelementen - eines im Bereich des Hydraulikausgangs und eines im Bereich des Hydraulikeingangs - besonders vorteilhaft. Dadurch kann sichergestellt werden, dass keine Partikel oder Verschmutzung in den Innenraum, insbesondere die hydraulische Leitung und/oder den Läuferraum des Druckmodulators, gelangen. Dadurch kann die Funktionsfähigkeit der im Druckmodulator angeordneten Ventile sichergestellt werden. Auch die Bewegung eines Läufers relativ zum Gehäuse im Hydraulikmedium kann dadurch störungsfrei und verschleißarm verlaufen.

Die Filterelemente haben aufgrund ihrer Anordnung keinen Einfluss auf die Regeldynamik des Druckmodulators, insbesondere der ABS-Regelung.

Gemäß einer Ausgestaltung der Erfindung kann ein gegen eine Rückstellkraft zu öffnender Volumenspeicher vorgesehen sein, der bei einer aktivierten Antiblockierfunktion das Volumen der hydraulischen Leitung vergrößert, wobei ein Linearantrieb, insbesondere Proportionalmagnet und/oder Hubmagnet, mit einem Läufer, insbesondere Anker, vorgesehen ist und eine Verfahrbewegung des Läufers das Öffnen des Volumenspeichers bewirkt. Wird demnach das Blockieren eines Rads detektiert, so kann der Läufer, insbesondere gegen die Rückstellkraft eines Rückstellelements, bewegt werden und damit einen Volumenspeicher schaffen oder öffnen, in den Hydraulikmedium fließen kann. Dadurch wird der Druck des Hydraulikmediums reduziert und somit der Druck auf die Bremsbacken einer Bremszange reduziert, sodass sich das Rad wieder drehen kann.

Das Gehäuse des Druckmodulators kann zumindest abschnittsweise ferromagnetisch ausgebildet sein. Somit kann das Gehäuse verwendet werden, um einen magnetischen Kreis zu bilden, der zur Bewegung des Läufers verwendet wird.

Der Läufer kann in einem das Hydraulikmedium aufweisenden Läuferraum, insbesondere Ankerraum, angeordnet sein, wobei zusätzlich zum Läuferraum und außerhalb des Läufers zumindest ein Hydraulikkanal vorgesehen ist, der einen Hydraulikmediumtransport am Läufer vorbei erlaubt. Somit kann sichergestellt werden, dass Hydraulikmedium schnell am Läufer, insbesondere Anker, vorbei von einem Ende des Druckmodulators zum anderen Ende des Druckmodulators befördert werden kann, ohne dass durch den Druckmodulator eine Dämpfungswirkung erfolgt.

Der Hydraulikkanal kann zumindest abschnittsweise in einer Gehäusewandung verlaufen. Dadurch ist es möglich, den Luftspalt zwischen dem ferromagnetischen Gehäuse und dem Läufer bzw. dem Anker gering zu halten und dennoch einen ausreichenden Transport von Hydraulikmedium sicherzustellen.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine schematische Längsschnittdarstellung eines erfindungsgemäßen Druckmodulators bei nicht aktivierter ABS-Funktion;
- Fig. 2: ein Detail A der Fig. 1;
- Fig. 3: ein Detail B der Fig. 1;
- Fig. 4: ein Detail C der Fig. 1.

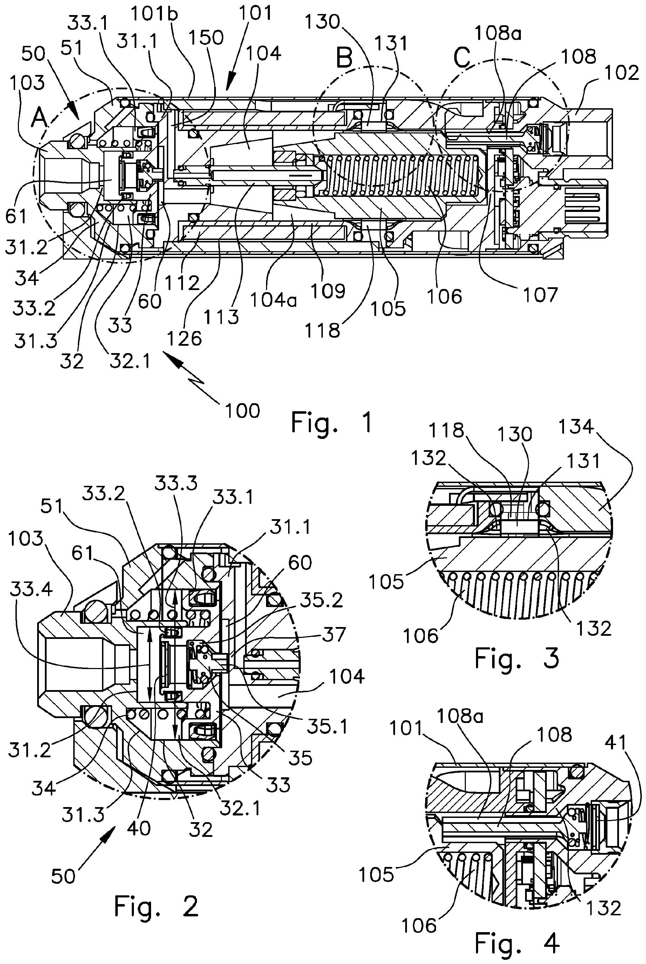

Die Fig. 1 zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104 im Inneren des Gehäuses 101 miteinander verbunden.

Die Hydraulikein- und -ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein als Anker 105 ausgebildeter Läufer aus Stahl oder einem Sondermaterial in einer in der Fig. 1 gezeigten Nullstellung. Der Anker 105 ist in einem als Ankerraum 104a ausgebildeten Läuferraum, der Teil der Hydraulikleitung 104 ist, bewegbar angeordnet und in der gezeigten Stellung aufgrund der Federkraft des Federelements 106 nach rechts bewegt, sodass er an einer Gehäusewand 107 anliegt. In dieser Stellung drückt der Anker 105 gegen ein Ventilelement 108, sodass ein Ventil 108a geöffnet ist und Hydraulikmedium das Ventil 108a durchströmen kann. Das Hydraulikmedium kann dann im Ankerraum 104a weiterhin entlang eines Spalts zwischen der Mantelfläche des Ankers 105 und der Gehäusewand 109 zum Hydraulikausgang 103 fließen, sofern ein noch näher zu beschreibendes Ventil in einem Bremskraftverstärker 50 geöffnet ist.

Das Gehäuse 101 weist eine Innenwand 118 mit einer Durchgangsöffnung auf, durch die der Anker 105 ragt. Die Innenwand 118 ist aus ferromagnetischem Material ausgebildet.

Bei aktivierter Antiblockierfunktion (ABS-Funktion) wird ein Linearantrieb, insbesondere ein Proportionalmagnet 126, aktiviert, der den Anker 105 entgegen der Federkraft des Federelements 106 bewegt. Dadurch wird das Volumen der Hydraulikleitung 104 zwischen der Gehäusewand 107 und dem Anker 105 vergrößert, sodass der durch das Hydraulikmedium auf eine Radbremse ausgeübte Druck geringer wird und die Radbremse geöffnet wird. Das Verschieben des Ankers 105 nach links hat weiterhin den Effekt, dass das Ventilelement 108 nach links bewegt wird und somit das Ventil 108a verschließt. Ein Geberzylinder im Bereich einer Bremsbetätigungsvorrichtung ist somit von der Radbremse abgekoppelt.

Der Proportionalmagnet 126 weist eine zylinderförmige Spulenanordnung 112 auf, durch die der Anker 105 angezogen werden kann. An einem Spulenkörper können Zapfen angeformt sein, die die Innenwand 118 durchragen. Sie sorgen für eine Positionierung und Ausrichtung der Innenwand 118, die ein separates Teil sein kann. Außerdem ermöglichen sie das Wickeln der Spule in vormontiertem Zustand.

Das Federelement 106 stützt sich einenends an dem Anker 105 und anderenends an einem nicht magnetischen Steuerkolben 113 ab, der fest mit dem Gehäuse 101 verbunden ist. Das Federelement 106 stützt sich somit mittelbar über den Steuerkolben 113 am Gehäuse 101, das zumindest im Bereich der Spulenanordnung 112 magnetisch leitend, insbesondere ferromagnetisch, ausgebildet ist, ab.

Der Bremskraftverstärker 50 (s. auch Fig. 2) weist ein Bremskraftverstärkergehäuseteil 51 auf, das mit einem Aktuatorgehäuseteil 101b verbunden ist. Im Gehäuse 101, insbesondere im Bremskraftverstärkergehäuseteil 51, ist ein Zylinderraum 32 vorhanden. In dem Zylinderraum 32 ist ein Stufenkolben 33 angeordnet, der einen Abschnitt 33.1 mit größerem Querschnitt und einen Abschnitt 33.2 mit kleinerem Querschnitt aufweist. Zwischen dem Abschnitt 33.1 und der Gehäusewand 31.1 ist ein Füllvolumen 60 und zwischen dem Abschnitt 33.2 und der Gehäusewand 31.2 ist ein Arbeitsvolumen 61 ausgebildet. Der Zwischenraum zwischen dem Abschnitt 33.1 und dem Gehäuseabschnitt 31.3 bildet einen Ringraum 32.1. Der Stufenkolben 33 stützt sich über ein Rückstellelement 34 an dem Gehäuseabschnitt 31.3 ab.

Das Vorsehen eines Stufenkolbens 33 hat den Vorteil, dass dadurch einfach ein Bremskraftverstärker 50 realisiert wird. Der Bremskraftverstärker 50 wird dabei innerhalb des Gehäuses 101 realisiert. Dies spart Gewicht, Kosten und ermöglicht die Kombination von einem schlanken Design bei einer erhöhten Bremskraft.

Innerhalb des Stufenkolbens 33 ist ein Ventil 35 angeordnet. Bei Einleitung einer Bremsung ist das Ventil 35 zunächst geöffnet und ermöglicht ein freies Durchströmen von Hydraulikmedium bis zur Anlage von Bremsbelägen an einer Bremsscheibe. Das Ventil 35 ist durch Anlage des Ventilstößels 35.1 an einer Gehäusewandung 37 bei nach rechts verlagertem Stufenkolben 33 geöffnet.

Eine Bremsanlage, umfassend eine Betätigungsvorrichtung, nicht arbeitenden Stufenkolben 33 und nicht dargestellte Bremskolben, arbeitet in dieser Phase mit einem geringen Verstärkungsfaktor. Dies bedeutet, dass mit geringem von einem Betätigungselement einer Betätigungsvorrichtung zurückgelegtem Weg eine relativ große Verstellung der Bremskolben erfolgt.

Sobald Beläge der Radbremse an einer Bremsscheibe anliegen, baut sich ein hydraulischer Druck auf, der auf beiden Seiten des Stufenkolbens 33 gleich groß ist. Da die Kolbenflächen an den Stirnseiten unterschiedlich groß sind, wird der Stufenkolben 33 jedoch nach links bewegt.

Entsprechend der Flächendifferenz der Kolbenflächen 33.3, 33.4 des Stufenkolbens 33 wird der Stufenkolben 33 daher gegen das Rückstellelement 34 gedrückt und gegen dessen Rückstellkraft und unter Kompression von im Ringraum 32.1 enthaltener Luft bewegt. Die Bewegung des Stufenkolbens 33 bewirkt ein Verschließen des Ventils 35 aufgrund der Wirkung eines Federelements 35.2, das sich am Stufenkolben 33 abstützt.

Der Ringraum 32.1 steht im gezeigten Ausführungsbeispiel genau wie der Innenraum des Ankers 105 (über den hohlen Steuerkolben 113) mit einem Entlüftungskanal 150 in Verbindung. Bei Bedarf kann Hydraulikmedium, das in den Ringraum 32.1 und/oder den Innenraum des Ankers 105 gelangt, abgelassen werden, um die Funktionsfähigkeit sicherzustellen.

Durch das Kräftegleichgewicht beidseits des Stufenkolbens 33 ergibt sich trotz geringen Betätigungsdruckes im Füllvolumen 60 ein hoher Druck im Arbeitsraum 61.

Die Bremsanlage arbeitet in dieser Phase mit einem großen Verstärkungsfaktor.

Die Innenwand 118 weist entlang ihres Umfangs Durchgangsöffnungen 130 auf, die einen Abschnitt von Hydraulikkanälen 131 bilden. Die Durchgangsöffnungen 130 verlaufen parallel zum Ankerraum 104a. Sie sind außerhalb des Ankers 105 angeordnet und insbesondere im Bereich des Gehäuses 101 angeordnet. Die Hydraulikkanäle 131 stellen quasi einen Bypass des Ankerraums 104a für das Hydraulikmedium dar. Somit kann Hydraulikmedium vom Hydraulikeingang 102 zum Hydraulikausgang 103 nicht nur im Ankerraum 104a entlang des Ankers 105 transportiert werden, sondern kann am Anker 105 vorbei durch die Hydraulikkanäle 131 transportiert werden. Somit kann Hydraulikmedium schneller vom Hydraulikeingang 102 zum Hydraulikausgang 103 transportiert werden, ohne dass eine Dämpfungswirkung entsteht.

Der Fig. 2 kann man auch entnehmen, dass der Stufenkolben 33 ein Filterelement 40 aufweist, das das Ventil 35 vor Verschmutzung schützt.

Wie sich der Darstellung der Fig. 3 entnehmen lässt, weisen die Hydraulikkanäle 131 Leitungsabschnitte 132, 133 auf, die sowohl in den Ankerraum 104a als auch in die Durchgangsöffnungen 130 münden und in einer Gehäusewandung 134 ausgebildet sind. Insbesondere sind die Hydraulikkanäle 131 im Bereich der Innenwand 118 angeordnet, nämlich an der Stelle, an der ein besonders kleiner Luftspalt zwischen dem Gehäuse 101 und dem Anker 106 realisiert werden muss.

Der Fig. 4 kann man entnehmen, dass im Bereich des Hydraulikeingangs 102 ein Filterelement 41 angeordnet ist, das das Ventil 108a mit dem Ventilelement 108 vor verschmutztem Hydraulikmedium schützt, das von einem nicht gezeigten Geberzylinder kommt.

Zur Erfassung eines blockierenden Rads können Sensoren vorgesehen sein, deren Signale eine Steuereinrichtung empfängt, die die Druckmodulationsanordnung, umfassend den Linearantrieb und das Ventil 108a sowie die Hydraulikleitung 104, steuert.

## Patentansprüche

1. Druckmodulator (100) für ein ABS-System, insbesondere eines Zweirads, mit einem Gehäuse (101), einem Hydraulikeingang (102) und einem damit über eine hydraulische Leitung (104) verbundenen Hydraulikausgang (103), sowie einer Druckmodulationsanordnung, mit der der Druck des Hydraulikmediums in der hydraulischen Leitung (104) bei aktivierter ABS-Funktion modulierbar ist, **dadurch gekennzeichnet, dass** der Druckmodulator (100) einen Bremskraftverstärker (50) aufweist.

2. Druckmodulator nach Anspruch 1, **dadurch gekennzeichnet, dass** ein Ventil (108a) vorgesehen ist, durch das die hydraulische Leitung (104) im Bereich des Hydraulikeingangs (102) bei aktivierter ABS-Funktion verschließbar ist.

3. Druckmodulator nach einem der vorhergehenden Ansprüche, **dadurch gekennzeichnet, dass** ein Bremskraftverstärkergehäuseteil (51) mit einem Aktuatorgehäuseteil (101b) verbunden ist.

4. Druckmodulator nach einem der vorhergehenden Ansprüche, **dadurch gekennzeichnet, dass** in dem Gehäuse (101) ein Zylinderraum (32) ausgebildet ist, in dem ein Stufenkolben (33) mit zwei Abschnitten (33.1, 33.2) unterschiedlicher Querschnittsfläche angeordnet ist, wobei zwischen einer Gehäusewand (31.1) und einem Stufenkolbenabschnitt (33.1) größerer Querschnittsfläche ein Füllvolumen (60) und zwischen einer Gehäusewand (31.2) und einem Stufenkolbenabschnitt (33.2) kleinerer Querschnittsfläche ein Arbeitsvolumen (61) ausgebildet ist.

5. Druckmodulator nach Anspruch 4, **dadurch gekennzeichnet, dass** der Stufenkolben (33) gegen die Rückstellkraft eines Rückstellelements (34) bewegbar ist.

6. Druckmodulator nach einem der Ansprüche 3 oder 4, **dadurch gekennzeichnet, dass** zwischen einem Gehäuseabschnitt (31.3) und dem Stufenkolbenabschnitt (33.1) größerer Querschnittsfläche ein Ringraum (32.1) ausgebildet ist, in dem das Rückstellelement (34) angeordnet ist.

7. Druckmodulator nach einem der vorhergehenden Ansprüche, **dadurch gekennzeichnet, dass** der Zylinderraum (32) und ein Läuferraum koaxial angeordnet sind.

8. Druckmodulator nach einem der vorhergehenden Ansprüche, **dadurch gekennzeichnet, dass** im Stufenkolben (33) ein Ventil (35) angeordnet ist.

9. Druckmodulator nach Anspruch 8, **dadurch gekennzeichnet, dass** sich das Ventil (35) über ein Federelement (35.2) am Stufenkolben (33) abstützt.

10. Druckmodulator nach einem der vorhergehenden Ansprüche, **dadurch gekennzeichnet, dass** ausgangsseitig des Stufenkolbens (33) ein Filterelement (40) vorgesehen ist.

11. Druckmodulator nach einem der vorhergehenden Ansprüche, **dadurch gekennzeichnet, dass** im Bereich des Hydraulikeingangs (102) ein Filterelement (41) vorgesehen ist.

12. Druckmodulator nach einem der vorhergehenden Ansprüche, **dadurch gekennzeichnet, dass** ein gegen eine Rückstellkraft zu öffnender Volumenspeicher vorgesehen ist, der bei einer aktivierten Antiblockierfunktion das Volumen der hydraulischen Leitung (104) vergrößert, wobei ein Linearantrieb, insbesondere Proportionalmagnet (126), mit einem Läufer, insbesondere Anker (105), vorgesehen ist und eine Verfahrbewegung des Läufers das Vergrößern des Volumens bewirkt.

13. Druckmodulator nach einem der vorhergehenden Ansprüche, **dadurch gekennzeichnet, dass** das Gehäuse (101) zumindest abschnittsweise ferromagnetisch ausgebildet ist.

14. Druckmodulator nach einem der vorhergehenden Ansprüche, **dadurch gekennzeichnet, dass** der Läufer in einem das Hydraulikmedium aufweisenden Läuferraum, insbesondere Ankerraum (104a), bewegbar angeordnet ist, wobei zusätzlich zum Läuferraum und außerhalb des Läufers zumindest ein Hydraulikkanal (131) vorgesehen ist, der einen Hydraulikmediumtransport am Läufer vorbei erlaubt.

15. Druckmodulator nach einem der vorhergehenden Ansprüche, **dadurch gekennzeichnet, dass** der Hydraulikkanal (131) zumindest abschnittsweise in einer Gehäusewandung (134) verläuft.

## Geänderte Patentansprüche

### Geänderte Patentansprüche gemäss Regel 137(2) EPÜ.

1. Druckmodulator (100) für ein ABS-System, insbesondere eines Zweirads, mit einem Gehäuse (101), einem Hydraulikeingang (102) und einem damit über eine hydraulische Leitung (104) verbundenen Hydraulikausgang (103), sowie einer Druckmodulationsanordnung, mit der der Druck des Hydraulikmediums in der hydraulischen Leitung (104) bei aktivierter ABS-Funktion modulierbar ist, wobei der Druckmodulator (100) einen Bremskraftverstärker (50) aufweist, **dadurch gekennzeichnet, dass** ein gegen eine Rückstellkraft zu öffnender Volumenspeicher vorgesehen ist, der bei einer aktivierten Antiblockierfunktion das Volumen der hydraulischen Leitung (104) vergrößert, wobei ein Linearantrieb, insbesondere Proportionalmagnet (126), mit einem Läufer, insbesondere Anker (105), vorgesehen ist und eine Verfahrbewegung des Läufers das Vergrößern des Volumens bewirkt.

2. Druckmodulator nach Anspruch 1, **dadurch gekennzeichnet, dass** ein Ventil (108a) vorgesehen ist, durch das die hydraulische Leitung (104) im Bereich des Hydraulikeingangs (102) bei aktivierter ABS-Funktion verschließbar ist.

3. Druckmodulator nach einem der vorhergehenden Ansprüche, **dadurch gekennzeichnet, dass** ein Bremskraftverstärkergehäuseteil (51) mit einem Aktuatorgehäuseteil (101b) verbunden ist

4. Druckmodulator nach einem der vorhergehenden Ansprüche, **dadurch gekennzeichnet, dass** in dem Gehäuse (101) ein Zylinderraum (32) ausgebildet ist, in dem ein Stufenkolben (33) mit zwei Abschnitten (33.1, 33.2) unterschiedlicher Querschnittsfläche angeordnet ist, wobei zwischen einer Gehäusewand (31.1) und einem Stufenkolbenabschnitt (33.1) größerer Querschnittsfläche ein Füllvolumen (60) und zwischen einer Gehäusewand (31.2) und einem Stufenkolbenabschnitt (33.2) kleinerer Querschnittsfläche ein Arbeitsvolumen (61) ausgebildet ist.

5. Druckmodulator nach Anspruch 4, **dadurch gekennzeichnet, dass** der Stufenkolben (33) gegen die Rückstellkraft eines Rückstellelements (34) bewegbar ist.

6. Druckmodulator nach einem der Ansprüche 3 oder 4, **dadurch gekennzeichnet, dass** zwischen einem Gehäuseabschnitt (31.3) und dem Stufenkolbenabschnitt (33.1) größerer Querschnittsfläche ein Ringraum (32.1) ausgebildet ist, in dem das Rückstellelement (34) angeordnet ist.

7. Druckmodulator nach einem der vorhergehenden Ansprüche, **dadurch gekennzeichnet, dass** der Zylinderraum (32) und ein Läuferraum koaxial angeordnet sind.

8. Druckmodulator nach einem der vorhergehenden Ansprüche, **dadurch gekennzeichnet, dass** im Stufenkolben (33) ein Ventil (35) angeordnet ist.

9. Druckmodulator nach Anspruch 8, **dadurch gekennzeichnet, dass** sich das Ventil (35) über ein Federelement (35.2) am Stufenkolben (33) abstützt.

10. Druckmodulator nach einem der vorhergehenden Ansprüche, **dadurch gekennzeichnet, dass** ausgangsseitig des Stufenkolbens (33) ein Filterelement (40) vorgesehen ist.

11. Druckmodulator nach einem der vorhergehenden Ansprüche, **dadurch gekennzeichnet, dass** im Bereich des Hydraulikeingangs (102) ein Filterelement (41) vorgesehen ist.

12. Druckmodulator nach einem der vorhergehenden Ansprüche, **dadurch gekennzeichnet, dass** das Gehäuse (101) zumindest abschnittsweise ferromagnetisch ausgebildet ist.

13. Druckmodulator nach einem der vorhergehenden Ansprüche, **dadurch gekennzeichnet, dass** der Läufer in einem das Hydraulikmedium aufweisenden Läuferraum, insbesondere Ankerraum (104a), bewegbar angeordnet ist, wobei zusätzlich zum Läuferraum und außerhalb des Läufers zumindest ein Hydraulikkanal (131) vorgesehen ist, der einen Hydraulikmediumtransport am Läufer vorbei erlaubt.

14. Druckmodulator nach einem der vorhergehenden Ansprüche, **dadurch gekennzeichnet, dass** der Hydraulikkanal (131) zumindest abschnittsweise in einer Gehäusewandung (134) verläuft.
